# EUROPEAN PATENT APPLICATION

(11) **EP 4 733 098 A1**
(43) Date of publication of application: **29.04.2026**
(21) Application number: 24864647.3
(22) Date of filing: 11.09.2024
(51) Int. Cl.: B60J 1/20

(54) **SUNSHADE CURTAIN ASSEMBLY AND VEHICLE**

(30) Priority: 11.09.2023 CN 202311165063
(71) Applicant: Fuyao Glass Industry Group Co., Ltd., Fuqing, Fujian 350300 (CN)
(72) Inventor: WU, Yue, Fuzhou, Fujian 350300 (CN); WANG, Baoyong, Fuzhou, Fujian 350300 (CN); YANG, Yang, Fuzhou, Fujian 350300 (CN); YU, Jianzhao, Fuzhou, Fujian 350300 (CN); LIU, Xianping, Fuzhou, Fujian 350300 (CN); WANG, Yu, Fuzhou, Fujian 350300 (CN)
(74) Representative: Patentanwälte Olbricht Buchhold Keulertz
(86) International application number: PCT/CN2024/118191
(87) International publication number: WO 2025/055931

(57) **Abstract**

A sunshade assembly and a vehicle, including: a glass pane (11), a drive assembly (12), a sunshade fabric (14), a pulley assembly (15) and a slide rail assembly (13). The slide rail assembly (13) includes a guide rail (131) and a slider (132). The guide rail (131) is fixed to the glass pane (11). The slider (132) includes a mounting portion (1323) and a sliding portion (1324) connected to each other, and the sliding portion (1324) is provided with a positioning portion (1325). The sunshade assembly has the following advantages: the reliability of the connection between a pull cord (153) and the slider (132) is improved, preventing jamming or abnormal noise caused by the falling-off of an end fitting of the pull cord (153) connected to the sliding portion (1324) of the slider (132); the reliability of the connection between the pull cord (153) and the spool (151) is improved, preventing the pull cord (153) from detaching from the spool (151) due to the falling-off of the end fitting of the pull cord (153) connected to the spool (151), which would otherwise lead to the failure of the winding of the pull cord (153), thereby further reducing the difficulty in assembling and prolonging the service life of the product; and the issues such as unsmooth operation of the sunshade fabric (14) and an edge strip (141) and derailment of the sunshade fabric (14) caused by uneven forces during operation are solved, thereby reducing the operating resistance of the sunshade, enhancing the stability during movement, and improving the assembling efficiency.

## Description

### RELATED APPLICATION

The present disclosure claims priority to Chinese Patent Application No. 202311165063.8 filed on September 11, 2023, which is hereby incorporated by reference in its entirety.

### TECHNICAL FIELD

The present disclosure relates to the technical field of vehicles, and particularly to a sunshade assembly and a vehicle.

### BACKGROUND

Automobile sunshades can effectively block direct sunlight. Currently, some existing automobile sunshades use a pull cord as a transmission medium: one end of the pull cord is connected to a slider on a pull rod, and after the pull cord is redirected by a roller, the other end of the pull cord is connected to a spool on a reel. In a manual sunshade, when the pull rod is pushed manually, the slider on the pull rod drives the reel to move through the pull cord. In an electric sunshade, a motor drives the spool, which then drives the pull rod through the pull cord. Both sides of the sunshade fabric are provided with edge strips, which are combined with the sunshade fabric to slide within guide rails on both sides, and the sunshade fabric is tensioned along a length direction of the reel to prevent the sagging of the sunshade fabric. The aforementioned components, together with the guide rails, reel and spring, form a complete sunshade retraction system.

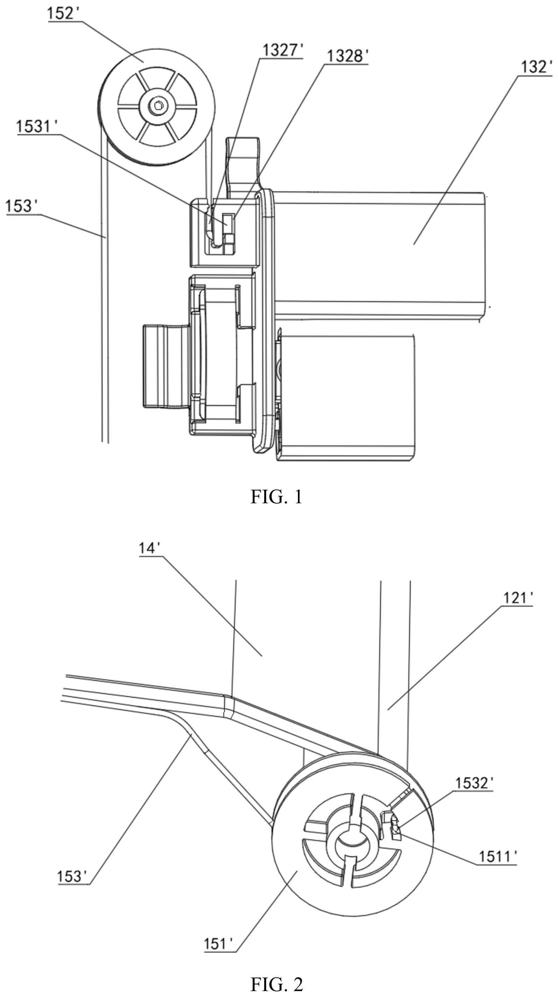

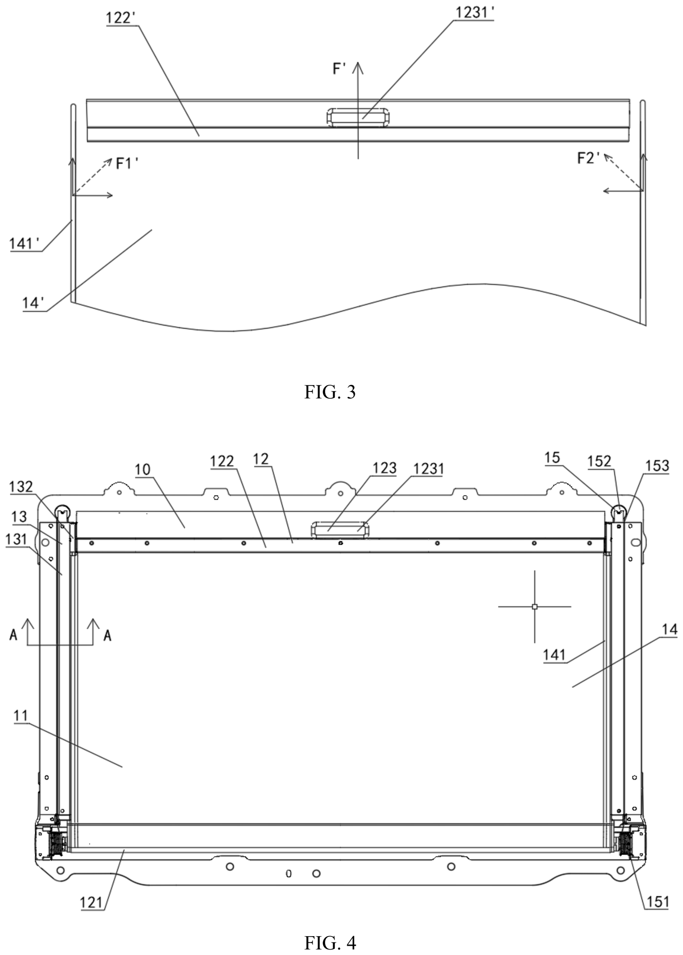

The existing sunshades mainly have the following deficiencies:
(1) In the existing sunshades, the connection and mounting of the pull cord and the slider are difficult. As illustrated in FIG. 1, an iron core at one end of the pull cord is pressed into a clamping groove opened in a height direction of a vehicle on the slider. During mounting, since the clamping groove opens in the height direction of the vehicle, the iron core is prone to falling off. After falling off from the clamping groove during operation, the iron core rubs against the guide rail, producing abnormal noise or even getting stuck with the guide rail.
(2) In the existing sunshades, the pull cord is connected to the spool. As illustrated in FIG. 2, the iron core at one end of the pull cord is inserted into an open clamping groove disposed on one side of the spool, and the pull cord is wound around the spool along a spool groove disposed on the same side as the clamping groove. Since the pull cord and the iron core thereof are mounted on the same side of the spool, the pull cord is prone to detaching from the spool during mounting, resulting in the failure of the proper winding of the pull cord.
(3) In the existing sunshades, both sides of the sunshade fabric are provided with edge strips, which are combined with the sunshade fabric to slide in guide rails on both sides. At an end where the sunshade fabric is connected to the pull rod, the edge strips are not connected to the slider. In a manual sunshade, as illustrated in FIG. 3, when an oblique pulling force is applied by the pull rod on the sunshade fabric and the edge strips, the edge strips are subjected to the pulling force applied by the sunshade fabric in a movement direction, which increases the friction between the edge strip and the guide rail, leading to a large resistance to movement of the edge strips, difficult pulling, and easy jamming. It may also cause the sunshade fabric to disengage from the guide rails, resulting in a failure of the movement of the sunshade. In addition, when the sunshade is assembled, the sunshade fabric enters from an end of the guide rail, and the position and direction of the edge strips need to be manually adjusted to enable the edge strips and the sunshade fabric to enter the guide rail, making the mounting complicated.

### SUMMARY

The present disclosure aims to provide a sunshade assembly and a vehicle for solving the problems proposed in the background section.

In order to achieve the above technical objective, the present disclosure adopts the following technical solutions.

The present disclosure provides a sunshade assembly, which includes a glass pane, a drive assembly, a slide rail assembly, a sunshade fabric, and a pulley assembly.

The drive assembly includes a reel, a pull rod, and a drive mechanism. The reel is fixed to the glass pane, the pull rod is disposed opposite to and spaced apart from the reel, and the drive mechanism is disposed on the pull rod or the reel.

The slide rail assembly includes a guide rail and a slider, and the guide rail is fixed to the glass pane. The slider includes a mounting portion and a sliding portion connected to each other. The mounting portion is fixed to the pull rod, and the sliding portion is slidably mounted in the guide rail. A part of the sliding portion facing the glass pane is a first portion, and a part of the sliding portion facing away from the glass pane is a second portion. The sliding portion is provided with a positioning portion.

The sunshade fabric has one end wound around the reel and the other end connected to the pull rod, and two side edges of the sunshade fabric are disposed in the guide rail.

The pulley assembly includes a spool, a pulley, and a pull cord. The spool is disposed at one end of the guide rail close to the reel. The pulley is disposed at the other end of the guide rail. One side of the pull cord is wound around the spool, and the other side of the pull cord is fixed to the positioning portion after being redirected by the pulley.

The number of the slide rail assemblies and the number of the pulley assemblies are both two. The two slide rail assemblies are symmetrically disposed on both sides of the glass pane, respectively. The two pulley assemblies are symmetrically disposed on the two sides of the glass pane, respectively.

In an embodiment, the pull cord includes a first end fitting fixed to the sliding portion. The positioning portion includes a positioning member, a cord mounting groove, and a first groove communicated with the cord mounting groove. The cord mounting groove is disposed on a surface of the second portion that faces away from the glass pane, and configured to accommodate the pull cord entering the sliding portion. The first groove is disposed between the first portion and the second portion, and located at an end of the sliding portion. A shape of the first groove matches that of the first end fitting, and the first end fitting is embedded and fixed in the first groove. A width of the first groove is greater than that of the cord mounting groove.

In an embodiment, the number of the positioning members is plural, and the plurality of positioning members are sequentially arranged at intervals along an arrangement path of the pull cord on the sliding portion.

Further, the pull cord entering the sliding portion includes a first segment which enters the sliding portion after being redirected by the pulley, a second segment disposed opposite to the first segment, and a connecting segment which connects the first segment and the second segment. At least one of the positioning members is disposed on the first segment, and at least one of the positioning members is disposed on the connecting segment.

In an embodiment, the pull cord further includes a second end fitting fixed to the spool which has a first side and a second side opposite to each other. The first side of the spool is provided with a second groove, a shape of which matches that of the second end fitting. The second end fitting is fixed in the second groove. The spool is further provided with a cord winding groove which accommodates the pull cord, and the pull cord is wound around the cord winding groove from the second side of the spool.

In an embodiment, the sliding portion is provided with a fixing member protruding from a surface of the second portion that faces away from the glass pane, both side edges of the sunshade fabric are provided with edge strips, each of the edge strips is provided with a hole cooperating with the fixing member, and the fixing member is fixed in the hole.

Further, the fixing member includes a side portion and a hook portion that are connected to each other and form a hook groove, and the hook groove is fixed in the hole.

Further, the number of the fixing members is plural, the hook groove of at least one of the fixing members faces a side away from the mounting portion, and the hook groove of at least one of the fixing members faces a movement direction of the sliding portion.

Further, the hole is disposed at an end of the edge strip close to the pull rod.

Optionally, the edge strip is made of plastic.

In an embodiment, the drive mechanism is a manual drive mechanism or a motor drive mechanism.

Further, the drive mechanism is a handle disposed on the pull rod.

In an embodiment, the spool is cylindrical or conical.

The present disclosure further provides a vehicle, which includes the aforementioned sunshade assembly.

Compared with the prior art, the present disclosure achieves the following advantageous effects:
(1) The reliability of the connection between the pull cord and the slider is improved, preventing jamming or abnormal noise caused by the falling-off of the end fitting of the pull cord connected to the sliding portion of the slider.
(2) The reliability of the connection between the pull cord and the spool is improved, preventing the pull cord from detaching from the spool due to the falling-off of the end fitting of the pull cord connected to the spool, which would otherwise lead to the failure of the winding of the pull cord, thereby further reducing the difficulty in assembling and prolonging the service life of the product.
(3) The issues such as unsmooth operation of the sunshade fabric and an edge strip and derailment of the sunshade fabric caused by uneven forces during operation are solved, thereby reducing the operating resistance of the sunshade, enhancing the stability during movement, and improving the assembling efficiency.

### BRIEF DESCRIPTION OF THE DRAWINGS

FIG. 1 is a structural diagram of a connection between a pull cord and a slider in the prior art;
FIG. 2 is a structural diagram of a connection between a pull cord and a spool in the prior art;
FIG. 3 is a schematic diagram of a force applied to an edge strip in the prior art;
FIG. 4 is a structural diagram of a sunshade assembly according to an embodiment of the present disclosure;
FIG. 5 is an enlarged schematic diagram of a first portion of a slider according to an embodiment of the present disclosure;
FIG. 6 is an enlarged schematic diagram of a second portion of a slider according to an embodiment of the present disclosure;
FIG. 7 is an enlarged schematic diagram of a connection between a pull cord and a sliding portion of a slider according to an embodiment of the present disclosure;
FIG. 8 is an enlarged schematic diagram of a connection between a pull cord and a spool according to an embodiment of the present disclosure;
FIG. 9 is an enlarged schematic diagram of a cylindrical spool according to an embodiment of the present disclosure;
FIG. 10 is an enlarged schematic diagram of a conical spool according to an embodiment of the present disclosure;
FIG. 11 is a cross-sectional view taken along line A-A in FIG. 4;
FIG. 12 is an enlarged schematic diagram of a connection between a slider and an edge strip according to an embodiment of the present disclosure;
FIG. 13 is a cross-sectional view taken along line B-B in FIG. 12; and
FIG. 14 is a schematic diagram of a force applied to an edge strip according to an embodiment of the present disclosure.

Reference signs:
10: sunshade assembly;
11: glass pane;
12: drive assembly; 121: reel; 122: pull rod; 123: drive mechanism; 1231: handle;
13: slide rail assembly; 131: guide rail; 132: slider; 1321: first portion;
1322: second portion; 1323: mounting portion; 1324: sliding portion;
1325: positioning portion; 1326: positioning member; 1327: cord mounting groove;
1328: first groove; 1329: fixing member; 13291: side portion; 13292: hook portion;
13293: hook groove;
14: sunshade fabric; 141: edge strip; 1411: hole;
15: pulley assembly; 151: spool; 1511: second groove; 1512: cord winding groove;
1513: first side; 1514: second side; 152: pulley; 153: pull cord; 1531: first end fitting;
1532: second end fitting; 1533: first segment; 1534: second segment;
1535: connecting segment;
F: force applied to pull rod; F1: force applied to one edge strip;
F2: force applied to another edge strip.

### DETAILED DESCRIPTION OF THE EMBODIMENTS

For a clearer understanding of the objectives, features, and effects of the present disclosure, specific embodiments will now be described in detail below with reference to the drawings. In the following description, many specific details are set forth to facilitate a full understanding of the present disclosure. However, the present disclosure can be implemented in many other ways different from those described here, and those skilled in the art can make similar improvements without departing from the connotation of the present disclosure. Therefore, the present disclosure is not limited to the specific embodiments disclosed below.

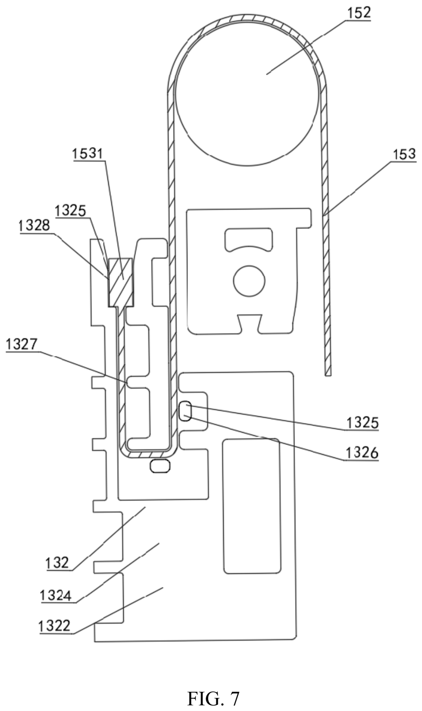

As illustrated in FIGS. 4 to 7, some embodiments of the present disclosure provide a sunshade assembly 10, which includes a glass pane 11, a drive assembly 12, a slide rail assembly 13, a sunshade fabric 14, and a pulley assembly 15.

The drive assembly 12 includes a reel 121, a pull rod 122, and a drive mechanism 123. The reel 121 is fixed to the glass pane 11, the pull rod 122 is disposed opposite to and spaced apart from the reel 121, and the drive mechanism 123 is disposed on the pull rod 122 or the reel 121.

The slide rail assembly 13 includes a guide rail 131 and a slider 132. The guide rail 131 is fixed to the glass pane 11. The slider 132 includes a mounting portion 1323 and a sliding portion 1324 connected to each other. The mounting portion 1323 is fixed to the pull rod 122, and the sliding portion 1324 is slidably mounted in the guide rail 131. A part of the sliding portion 1324 facing the glass pane 11 is a first portion 1321, and a part of the sliding portion 1324 facing away from the glass pane 11 is a second portion 1322. The sliding portion 1324 is provided with a positioning portion 1325;

The sunshade fabric 14 has one end wound around the reel 121 and the other end connected to the pull rod 122. Two side edges of the sunshade fabric 14 are disposed in the guide rail 131.

The pulley assembly 15 includes a spool 151, a pulley 152, and a pull cord 153. The spool 151 is disposed at one end of the guide rail 131 close to the reel 121, and the pulley 152 is disposed at the other end of the guide rail 131. One side of the pull cord 153 is wound around the spool 151, and the other side of the pull cord 153 is fixed to the positioning portion 1325 after being redirected by the pulley 152.

The number of the slide rail assemblies 13 and the number of the pulley assemblies 15 are both two. The two slide rail assemblies 13 are symmetrically disposed on both sides of the glass pane 11, respectively. The two pulley assemblies 15 are symmetrically disposed on both sides of the glass pane 11, respectively.

By disposing the positioning portion 1325 on the sliding portion 1324 of the slider 132, and fixing the other side of the pull cord 153 to the positioning portion 1325 of the slider 132 after the other side of the pull cord 153 is redirected by the pulley 152, the reliability of the connection between the pull cord 153 and the slider 132 is improved, thereby preventing the part of the pull cord 153 connected to the sliding portion 1324 of the slider 132 from falling off from the sliding portion 1324, which would otherwise cause jamming or abnormal noise in the sunshade assembly 10.

In this embodiment, the material of the glass pane 11 is not limited, and is usually inorganic glass, organic glass, or a composite material. The material of the guide rail 131 is also not limited, and is usually plastic or metal.

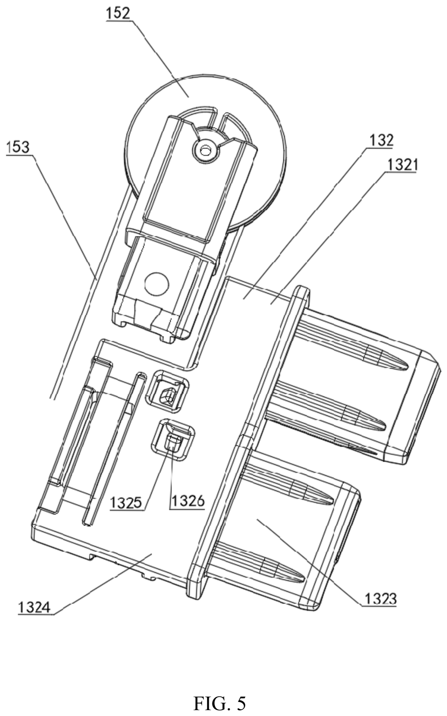

Further, in an embodiment, as illustrated in FIGS. 5 to 7, the pull cord 153 includes a first end fitting 1531 fixed to the sliding portion 1324. The positioning portion 1325 includes a positioning member 1326, a cord mounting groove 1327, and a first groove 1328 communicated with the cord mounting groove 1327. The cord mounting groove 1327 is disposed on a surface of the second portion 1322 that faces away from the glass pane 11, and configured to accommodate the pull cord 153 entering the sliding portion 1324. The first groove 1328 is disposed between the first portion 1321 and the second portion 1322, and located at an end of the sliding portion 1324. The shape of the first groove 1328 matches that of the first end fitting 1531, and the first end fitting 1531 is embedded and fixed in the first groove 1328. The width of the first groove 1328 is greater than that of the cord mounting groove 1327.

During mounting, the pull cord 153 enters the sliding portion 1324, passes through the positioning member 1326, and then enters the cord mounting groove 1327. Since the cord mounting groove 1327 is disposed on the surface of the second portion 1322 that faces away from the glass pane 11, the pull cord 153 can be pressed into the cord mounting groove 1327 from the surface of the second portion 1322 that faces away from the glass pane 11. The cord mounting groove 1327 is communicated with the first groove 1328 that is located at the end of the sliding portion 1324, and the width of the first groove 1328 is greater than that of the cord mounting groove 1327, allowing the pull cord 153 to enter the first groove 1328. The pull cord 153 is then pressed into the cord mounting groove 1327 and the first groove 1328. At this time, the first end fitting 1531 is located outside the end of the sliding portion 1324. Subsequently, the pull cord 153 is pulled from the other end of the pull cord 153, so that the first end fitting 1531 is embedded and fixed in the first groove 1328, thereby improving the reliability of the connection between the pull cord 153 and the slider 132. The first end fitting 1531 is limited by the first groove 1328 in the height direction of the vehicle, which solves the problem in the prior art that the end fitting of the pull cord connected to the sliding portion of the slider is prone to falling off in the height direction of the vehicle.

In an embodiment, the number of the positioning members 1326 is plural, and the plurality of positioning members 1326 are sequentially arranged at intervals along an arrangement path of the pull cord 153 on the sliding portion 1324. By providing the plurality of positioning members 1326, the reliability of the connection between the pull cord 153 and the slider 132 is further improved.

Further, as illustrated in FIGS. 5 to 7, the pull cord 153 entering the sliding portion 1324 includes a first segment 1533 which enters the sliding portion 1324 after being redirected by the pulley 152, a second segment 1534 disposed opposite to the first segment 1533, and a connecting segment 1535 which connects the first segment 1533 and the second segment 1534. At least one of the positioning members 1326 is disposed on the first segment 1533, and at least one of the positioning members 1326 is disposed on the connecting segment 1535. By disposing at least one of the positioning members 1326 on each of the first segment 1533 and the connecting segment 1535, the connection reliability between the pull cord 153 and the slider 132 is further improved.

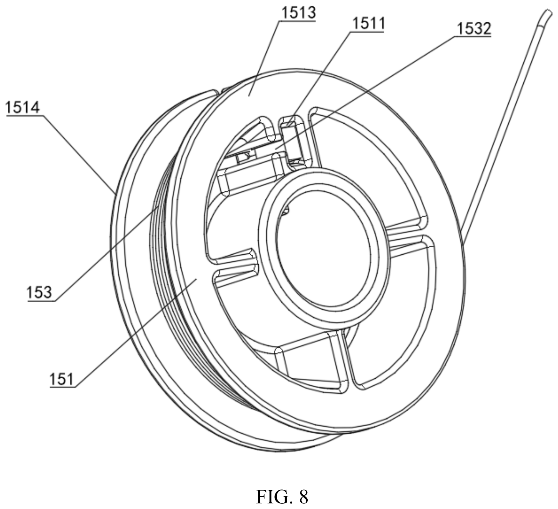

In an embodiment, as illustrated in FIG. 8, the pull cord 153 further includes a second end fitting 1532 fixed to the spool 151 which has a first side 1513 and a second side 1514 opposite to each other. The first side 1513 of the spool 151 is provided with a second groove 1511, the shape of which matches that of the second end fitting 1532. The second end fitting 1532 is fixed in the second groove 1511. The spool 151 is further provided with a cord winding groove 1512 which accommodates the pull cord 153, and the pull cord 153 is wound around the cord winding groove 1512 from the second side 1514 of the spool 151.

The second end fitting 1532 is disposed in the second groove 1511 located on the first side 1513 of the spool 151, and the pull cord 153 is wound around the cord winding groove 1512 from the second side 1514 of the spool 151. The position of the second end fitting 1532 and the position where the pull cord 153 starts to be wound around the cord winding groove 1512 of the spool 151 are on different sides. Compared with the prior art where the above two positions are on the same side, the present disclosure enhances the fixing effect between the spool 151 and the pull cord 153, and solves the problem in the prior art that the end fitting of the pull cord connected to the spool is prone to detaching from the spool, which would cause the failure of the proper winding of the pull cord.

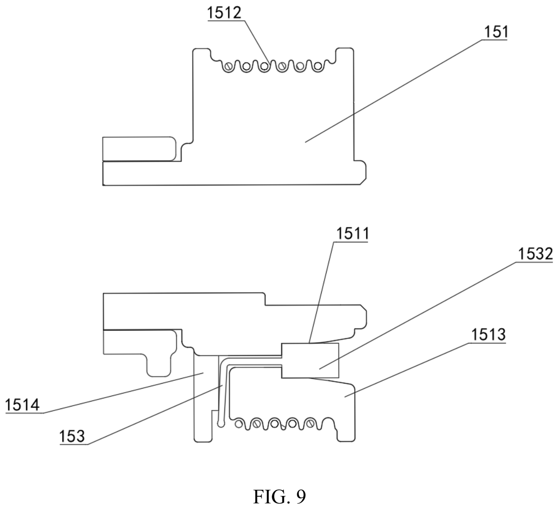

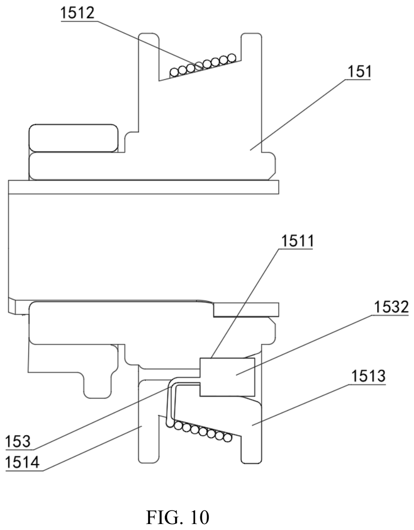

In this embodiment, optionally, as illustrated in FIG. 9, the spool 151 is cylindrical. Alternatively, as illustrated in FIG. 10, the spool 151 is conical.

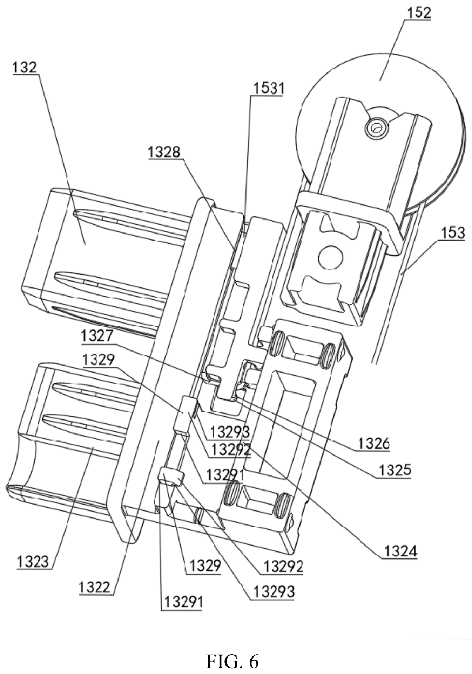

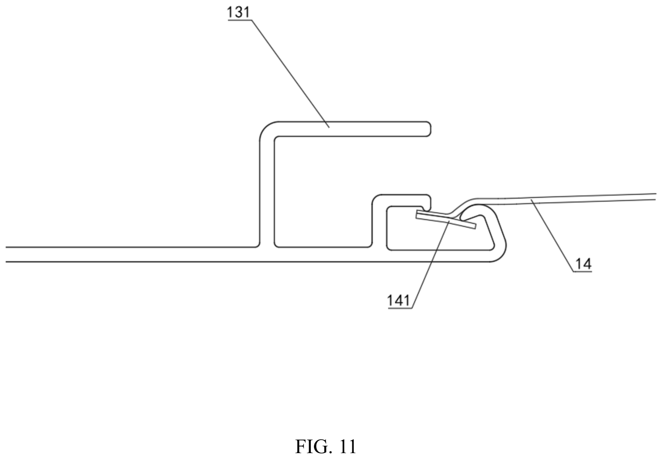

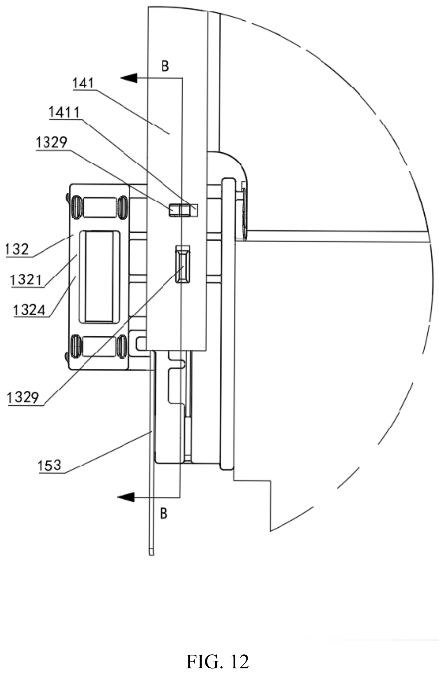

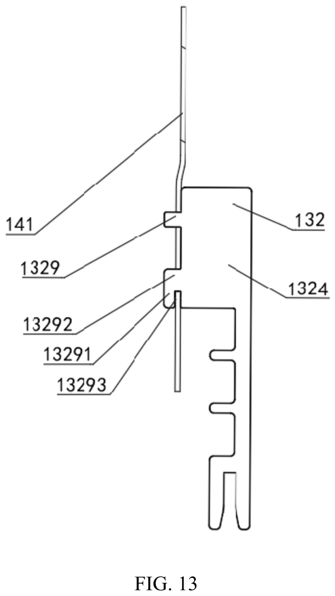

In an embodiment, as illustrated in FIGS. 6 and 11 to 13, the sliding portion 1324 is provided with a fixing member 1329 protruding from a surface of the second portion 1322 that faces away from the glass pane 11, and both side edges of the sunshade fabric 14 are provided with edge strips 141. Each of the edge strips 141 is provided with a hole 1411 cooperating with the fixing member 1329, and the fixing member 1329 is fixed in the hole 1411.

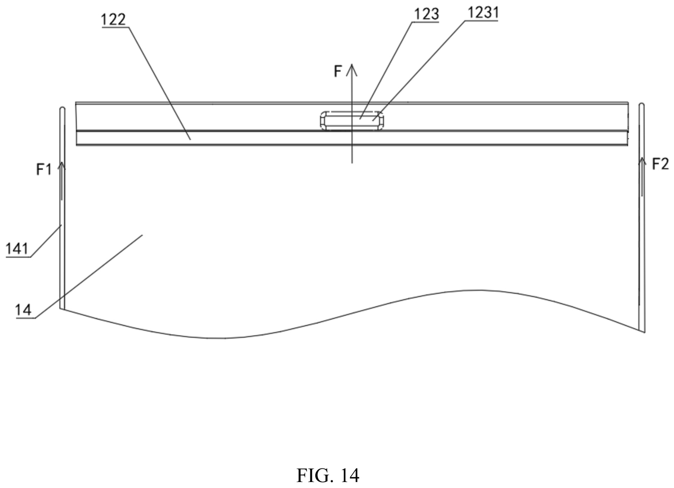

The cooperation between the hole 1411 and the fixing member 1329 connects the edge strip 141 to the sliding portion 1324 of the slider 132, enabling them to jointly form a sliding fit with the guide rail 131. As illustrated in FIG. 14, under this configuration, the direction of force acting on the edge strips 141 is the same as that acting on the pull rod 122, resulting in small friction between the edge strips 141 and the guide rails 131, and low movement resistance of the edge strip 141, making the edge strips 141 easier to pull.

In this embodiment, the edge strip 141 may be made of a plastic material such as TPV (Thermoplastic Vulcanizate), TPE (Thermoplastic Elastomer), or TPEE (Thermoplastic Polyester Ether), or alternatively of a steel edge strip or a PDF (Prevent Derailed Function) edge strip. Optionally, the edge strip 141 is made of plastic. The plastic edge strip has the advantages such as low friction coefficient, easy retraction and bending, and good flexibility, which can reduce movement resistance of the sunshade fabric 14 during operation and improve the operational stability of the sunshade fabric 14 in the sunshade assembly 10.

In this embodiment, further, the fixing member 1329 includes a side portion 13291 and a hook portion 13292 that are connected to each other and form a hook groove 13293, and the hook groove 13293 is fixed in the hole 1411. The cooperation between the hook groove 13293 of the fixing member 1329 and the hole 1411 of the edge strip 141 connects the edge strip 141 to the sliding portion 1324 of the slider 132, enabling them to jointly form a sliding fit with the guide rail 131.

In this embodiment, further, the number of the fixing members 1329 is plural, the hook groove 13293 of at least one of the fixing members 1329 faces a side away from the mounting portion 1323, and the hook groove 13293 of at least one of the fixing members 1329 faces a movement direction of the sliding portion 1324, which further reduces the friction between the edge strip 141 and the guide rail 131, making the edge strip 141 even easier to pull.

Since the hook grooves 13293 are fixed in the holes 1411, the hook groove 13293 of at least one of the fixing members 1329 faces a side away from the mounting portion 1323, which can prevent the edge strip 141 from being subjected to a force along the direction in which the two guide rails 131 are spaced apart. The hook groove 13293 of at least one of the fixing members 1329 faces a movement direction of the sliding portion 1324. Since the sliding portion 1324 is connected to the mounting portion 1323 which is fixed to the pull rod 122, the force applied to the edge strip 141 in the same direction as the pull rod 122 can be enhanced.

In this embodiment, further, the hole 1411 is disposed at the end of the edge strip 141 close to the pull rod 122, which facilitates the sliding portion 1324 of the slider 132 to guide the edge strip 141 into the guide rail 131, thereby improving the mounting convenience of the edge strip 141.

In an embodiment, the drive mechanism 123 may be a manual drive mechanism or a motor drive mechanism, so that the sunshade fabric 14 can be opened and closed manually or automatically.

Further, as illustrated in FIG. 4, the manual drive mechanism is a handle 1231 disposed on the pull rod 122.

The present disclosure further provides a vehicle, which includes the sunshade assembly 10 as described above.

By using the sunshade assembly 10 as described above, the vehicle improves the reliability of the connection between the pull cord 153 and the slider 132, and avoids jamming or abnormal noise caused by the falling-off of the end fitting of the pull cord 153 connected to the sliding portion 1324 of the slider 132. Meanwhile, the vehicle improves the reliability of the connection between the pull cord 153 and the spool 151, and prevents the pull cord 153 from detaching from the spool 151 due to the falling-off of the end fitting of the pull cord 153 connected to the spool 151, which would otherwise lead to winding failure of the pull cord 153, thereby further reducing the difficulty in assembling and prolonging the service life of the product. In addition, the vehicle solves the issues such as unsmooth operation of the sunshade fabric 14 and the edge strip 141, the derailment of the sunshade fabric 14, etc., caused by uneven forces during operation, thereby reducing the operating resistance of the sunshade, enhancing the stability during movement, and improving the assembling efficiency.

It should be noted that in the present disclosure, if the glass pane 11 is inorganic glass, examples may include soda-lime glass (also known as soda-lime silicate glass), aluminosilicate glass, borate glass, borosilicate glass, lithium aluminosilicate glass, alkali-free glass, quartz glass, etc. Among these, the soda-lime glass is particularly preferred. From the perspective of improving the strength, the inorganic glass may also be tempered glass, which may be either chemically tempered glass or physically tempered glass.

If the glass pane 11 is organic glass (resin), examples may include polycarbonate resin, polystyrene resin, aromatic polyester resin, acrylic resin, polyester resin, polyarylate resin, condensates of halogenated bisphenol A and ethylene glycol, acrylic urethane resin, acrylic resin containing halogenated aryl groups, etc. Among these, polycarbonate resin such as aromatic polycarbonate resin and acrylic resin such as polymethyl methacrylate-based acrylic resin are preferred; polycarbonate resin is more preferred; and bisphenol A-based polycarbonate resin is particularly preferred. In addition, two or more of the above resins may be used in combination.

The technical features of the above embodiments may be combined arbitrarily. For the conciseness of description, not all possible combinations of the various technical features in the above embodiments have been described. However, as long as there is no contradiction in the combinations of these technical features, all such combinations shall be deemed to fall within the scope of the present disclosure.

The embodiments described above merely represent several implementations of the present disclosure, and shall not be construed as limitations to the scope of the invention patent although the descriptions thereof are specific and detailed. It shall be noted that for those of ordinary skill in the art, several modifications and improvements can be made without departing from the concept of the present disclosure, and those modifications and improvements shall fall within the protection scope of the present disclosure. Therefore, the patent protection scope of the present disclosure shall be subject to the appended claims.

In addition, the terms "first" and "second" are used merely for descriptive purposes, and shall not be construed as indicating or implying relative importance, or as implicitly specifying the quantity of the technical features indicated. Therefore, a feature defined with "first" or "second" may explicitly or implicitly include at least one such feature. In the description of the present disclosure, the meaning of "a plurality of" is at least two, such as two, three, etc., unless otherwise explicitly and specifically defined.

In the present disclosure, unless otherwise explicitly specified and defined, terms such as "mount", "connect" and "fix" shall be understood in a broad sense, e.g., it may indicate a fixed connection, a detachable connection (e.g., using bolts or screws), an integrated connection (e.g., riveting, welding), a mechanical connection, an electrical connection, a direct connection, an indirect connection through an intermediate medium, an internal communication between two elements or an interaction relationship between two elements, unless otherwise explicitly defined. For those of ordinary skill in the art, the specific meanings of the above terms in the present disclosure can be understood according to specific circumstances.

In addition, in any technical solution disclosed in the present disclosure, unless otherwise stated, the terms used to indicate a positional relationship or a shape shall include states or shapes that are approximate, similar, or close thereto.

Any component provided in the present disclosure may either be assembled from a plurality of separate constituent parts or be a single component manufactured through an integral forming process.

In the present disclosure, unless otherwise explicitly specified and defined, a first feature being "on" or "under" a second feature may mean that the first and second features are in direct contact with each other, or that the first and second features are in indirect contact with each other through an intermediate medium. The terms "vertical", "horizontal", "upper", "lower", "left", "right" and similar expressions used herein are for illustrative purposes only, and do not represent the only implementation.

## Claims

1. A sunshade assembly, comprising:
a glass pane;
a drive assembly comprising a reel, a pull rod, and a drive mechanism, wherein the reel is fixed to the glass pane, the pull rod is disposed opposite to and spaced apart from the reel, and the drive mechanism is disposed on the pull rod or the reel;
a slide rail assembly comprising a guide rail and a slider, wherein the guide rail is fixed to the glass pane; the slider comprises a mounting portion and a sliding portion connected to each other, the mounting portion is fixed to the pull rod, and the sliding portion is slidably mounted in the guide rail; a part of the sliding portion facing the glass pane is a first portion, and a part of the sliding portion facing away from the glass pane is a second portion; and the sliding portion is provided with a positioning portion;
a sunshade fabric, one end of which is wound around the reel and the other end of which is connected to the pull rod, two side edges of the sunshade fabric being disposed in the guide rail; and
a pulley assembly comprising a spool, a pulley, and a pull cord, wherein the spool is disposed at one end of the guide rail close to the reel, the pulley is disposed at the other end of the guide rail, one side of the pull cord is wound around the spool, and the other side of the pull cord is fixed to the positioning portion after being redirected by the pulley;
wherein the number of the slide rail assemblies and the number of the pulley assemblies are both two, the two slide rail assemblies are symmetrically disposed on both sides of the glass pane, respectively, and the two pulley assemblies are symmetrically disposed on both sides of the glass pane, respectively.

2. The sunshade assembly according to claim 1, wherein the pull cord comprises a first end fitting fixed to the sliding portion, and the positioning portion comprises a positioning member, a cord mounting groove, and a first groove communicated with the cord mounting groove;
the cord mounting groove is disposed on a surface of the second portion that faces away from the glass pane, and configured to accommodate the pull cord entering the sliding portion;
the first groove is disposed between the first portion and the second portion, and located at an end of the sliding portion;
a shape of the first groove matches that of the first end fitting, and the first end fitting is embedded and fixed in the first groove; and
a width of the first groove is greater than that of the cord mounting groove.

3. The sunshade assembly according to claim 2, wherein the number of the positioning members is plural, and the plurality of positioning members are sequentially arranged at intervals along an arrangement path of the pull cord on the sliding portion.

4. The sunshade assembly according to claim 3, wherein the pull cord entering the sliding portion comprises a first segment which enters the sliding portion after being redirected by the pulley, a second segment disposed opposite to the first segment, and a connecting segment which connects the first segment and the second segment; and
at least one of the positioning members is disposed on the first segment, and at least one of the positioning members is disposed on the connecting segment.

5. The sunshade assembly according to claim 1, wherein the pull cord further comprises a second end fitting fixed to the spool which has a first side and a second side opposite to each other;
the first side of the spool is provided with a second groove, a shape of which matches that of the second end fitting, and the second end fitting is fixed in the second groove; and
the spool is further provided with a cord winding groove which accommodates the pull cord, and the pull cord is wound around the cord winding groove from the second side of the spool.

6. The sunshade assembly according to claim 1, wherein the sliding portion is provided with a fixing member protruding from a surface of the second portion that faces away from the glass pane, both side edges of the sunshade fabric are provided with edge strips, each of the edge strips is provided with a hole cooperating with the fixing member, and the fixing member is fixed in the hole.

7. The sunshade assembly according to claim 6, wherein the fixing member comprises a side portion and a hook portion that are connected to each other and form a hook groove, and the hook groove is fixed in the hole.

8. The sunshade assembly according to claim 7, wherein the number of the fixing members is plural, the hook groove of at least one of the fixing members faces a side away from the mounting portion, and the hook groove of at least one of the fixing members faces a movement direction of the sliding portion.

9. The sunshade assembly according to claim 6, wherein the hole is disposed at an end of the edge strip close to the pull rod.

10. The sunshade assembly according to claim 6, wherein the edge strip is made of plastic.

11. The sunshade assembly according to claim 1, wherein the drive mechanism is a manual drive mechanism or a motor drive mechanism.

12. The sunshade assembly according to claim 11, wherein the drive mechanism is a handle disposed on the pull rod.

13. The sunshade assembly according to claim 1, wherein the spool is cylindrical or conical.

14. A vehicle, comprising the sunshade assembly according to any one of claims 1 to 13.
